# EUROPÄISCHE PATENTSCHRIFT

(11) **EP 3 098 129 B1**
(45) Veröffentlichungstag und Bekanntmachung des Hinweises auf die Patenterteilung: **20.12.2017**
(21) Anmeldenummer: 16000757.1
(22) Anmeldetag: 31.03.2016
(51) Int. Cl.: B60T 13/68

(54) **STEUEREINHEIT**
CONTROL UNIT
UNITE DE COMMANDE

(30) Priorität: 15.05.2015 DE 102015006197
(43) Veröffentlichungstag der Anmeldung: 30.11.2016
(73) Patentinhaber: WABCO GmbH, 30432 Hannover (DE)
(72) Erfinder: Kiel, Bernd-Joachim, 31515 Wunstorf (DE)

(56) Entgegenhaltungen:
- EP-A1- 2 853 453
- EP-A2- 0 234 290
- DE-A1- 19 633 224
- DE-A1- 19 744 066
- DE-A1-102008 014 547

## Beschreibung

Die vorliegende Erfindung betrifft ein Bremssystem für ein Nutzfahrzeug mit Anhänger, mit einem Anhängersteuerventil zum Ansteuern einer Anhängerbremsanlage vom Nutzfahrzeug aus, einer Vorratsdruckleitung zum Beaufschlagen der Anhängerbremsanlage mit einem Vorratsdruck, einer Steuerdruckleitung zum Beaufschlagen der Anhängerbremsanlage mit einem bedienerseitig, insbesondere mittels einer Bremspedaleinheit, eingesteuerten Steuerdruck, Ventilmitteln zum selektiven Verbinden entweder der Vorratsdruckleitung oder der Steuerdruckleitung mit dem Anhängersteuerventil, und einer elektronischen Steuereinheit, die zum Ausführen einer elektronischen Bremsregelung eingerichtet ist. Ein Beispiel des Standes der Technik ist in DE 10 2008 014 547 offenbart. Systeme der vorstehend bezeichneten Art sind bei Nutzfahrzeugen allgemein bekannt. Die mit der Vorratsdruckleitung üblicherweise verbundenen Druckluftquellen, die einen oder vorzugsweise (aus Sicherheitsgründen) mehrere Bremskreisläufen versorgen, werden bekannterweise dazu benutzt, auch den gebremsten, mit dem Nutzfahrzeug zu koppelnden Anhänger mit Bremsdruck zu versorgen.

Zum Steuern der Bremsvorgänge des Anhängers ist bekannt, an den Nutzfahrzeugen zur Übertragung des Bremsdrucks Anhängersteuerventile vorzusehen (ASTV), auch bezeichnet als "Trailer Control Valves". An diese Anhängersteuerventile werden entsprechende Bremsdruckleitungen des Anhängers angeschlossen, um Bremsdruck gezielt an den Anhänger zu übertragen.

Aus dem Stand der Technik ist es ferner bekannt, eine elektronische Schnittstelle bereitzustellen, mittels welcher Steuersignale zum Anhänger übertragen werden, um dort gezielt Bremsvorgänge auszuführen und Bremsventile anzusteuern, die am Anhänger vorgesehen sind. Dies können beispielsweise im Falle einer elektronischen Bremsregelung ABS-Ventile sein.

Die Kommunikation mit dem Anhänger übernimmt im eingangs bezeichneten Bremssystem eine elektronische Steuereinheit, die am Nutzfahrzeug vorgesehen ist. Die elektronische Steuereinheit des Nutzfahrzeugs regelt üblicherweise auch elektronische Bremsregelungen am Nutzfahrzeug selbst. Um in allen normalen Fahrsituationen, in denen keine elektronische Bremsregelung eingreift, Bremsvorgänge einzuleiten, weisen die vorbezeichneten Bremssysteme eine oder mehrere Steuerdruckleitungen auf, mittels derer von einer Bremspedaleinheit oder anderen Steuermitteln ein dem Bremswunsch des Fahrers entsprechender Steuerdruck eingesteuert und an beispielsweise die Bremsanlagen des Nutzfahrzeugs übertragen wird. Beim Bremssystem der vorbezeichneten Art wird ein solcher eingesteuerter Bremsdruck über die Steuerdruckleitung auch dem Anhängersteuerventil zugeführt, um diesen Steuerdruck für die Bremsanlagen des Anhängers des Nutzfahrzeugs zur Verfügung stellen zu können.

Bremssysteme der vorbezeichneten Art, wie sie beispielsweise von der hiesigen Anmelderin eingesetzt werden, funktionieren in der Praxis zuverlässig und zufriedenstellend. Allerdings besteht trotzdem weiterer Verbesserungsbedarf. Insbesondere bei der Zurverfügungstellung von druckbeaufschlagter Luft für den Anhänger des Nutzfahrzeuges und somit das Anhängersteuerventil ist zur Verwirklichung aller benötigten Funktionen eine Vielzahl von Ventilmitteln notwendig, die jeweils über entsprechende Anschlüsse verfügen und separat montiert werden müssen. All diese Ventile tragen in ihrer Summe zu einem gewissen Montageaufwand bei, und verkörpern ein gewisses Risiko hinsichtlich einer Druckluft-Leckage. Zudem erzeugen die Ventilmittel im Betrieb durch den Schaltvorgang einerseits und durch entweichende Druckluft bei Entlüftungsvorgängen andererseits teils unerwünschte Geräusche, deren Dämmung aufwändig sein kann.

Der vorliegenden Erfindung lag somit die Aufgabe zugrunde, die Bremssysteme der vorbezeichneten Art hinsichtlich der angesprochenen Aspekte zu verbessern.

Die Erfindung löst die ihr zugrunde liegende Aufgabe bei einem Bremssystem der eingangs bezeichneten Art dadurch, dass die Ventilmittel als eine bauliche Ventileinheit ausgebildet sind, mittels der elektronischen Steuereinheit zwischen den Schaltzuständen
a) Verbinden einer anhängerseitigen Druckleitung mit der Steuerdruckleitung, und
b) Verbinden der anhängerseitigen Druckleitung mit der Vorratsdruckleitung schaltbar sind, und dadurch, dass die Ventilmittel dazu eingerichtet sind, die anhängerseitige Druckleitung in einem elektronischen Bremsregelfall in Abhängigkeit von korrespondierenden Befehlen der elektronischen Steuereinheit mit einem Regelungsdruck zu beaufschlagen. Unter anhängerseitig wird hierbei die Druckleitung verstanden, die zwischen dem Anhängersteuerventil und der Ventileinheit (Auslassseite der Ventileinheit) angeordnet ist. Die Erfindung macht sich insbesondere die Erkenntnis zunutze, dass das Integrieren der Ventilmittel in eine bauliche Einheit eine Reduzierung des Montage- und Wartungsaufwandes nach sich zieht. Während es im Stand der Technik bislang erforderlich war, verschiedene, baulich separate Ventile vorzusehen, um zum einen zwischen manuell eingesteuertem Bremsdruck und von der elektronischen Steuereinheit eingesteuertem Vorratsdruck umschalten zu können, und diese Umschaltung zum anderen dann geregelt durchzuführen, werden nun erfindungsgemäß diese Funktionsgruppen in eine Ventileinheit integriert.
   Mit dieser Ventileinheit ist es nunmehr möglich, das Anhängersteuerventil gezielt anzusteuern und wahlweise den Steuerdruck oder Vorratsdruck, oder etwa einen geregelten, vom Vorratsdruck abweichenden Regeldruck an das Anhängersteuerventil zu leiten. Die elektronische Bremsregelung ist erfindungsgemäß vorzugsweise ausgewählt aus der Liste bestehend aus ESC, ABS und ASR, oder einer Kombination mehrerer oder sämtlicher dieser Funktionen. ESC steht hierbei für elektronische Stabilitätskontrolle (Electronic Stability Control). ABS steht hierbei für Antiblockier-Bremssystem (Antilock Braking System) und ASR steht hierbei für eine Antischlupfregelung.
   In einer bevorzugten Weiterbildung der Erfindung ist die Ventileinheit mittels der elektronischen Steuereinheit in den Schaltzustand
c) Entlüften der anhängerseitigen Druckleitung schaltbar. Durch gezieltes Entlüften der anhängerseitigen Druckleitung ist die Höhe des im elektronischen Bremsregelfall eingesteuerten Drucks, der an dem Anhängersteuerventil ansteht, regelbar.
   In einer weiteren bevorzugten Weiterbildung der Erfindung ist die Ventileinheit mittels der elektronischen Steuereinheit in den Schaltzustand
d) Halten des Drucks in der anhängerseitigen Druckleitung schaltbar. Mittels der Kombination dieser Schaltzustände ist es der erfindungsgemäßen Ventileinheit als bauliche Einheit ermöglicht, den in der anhängerseitigen Druckleitung anstehenden Bremsdruck in Richtung der Höhe des Vorratsdrucks zu erhöhen, ihn auf einer vorbestimmten Höhe zu halten, oder in Richtung der Höhe des Umgebungsdrucks mittels Entlüften zu senken. Durch eine solche Funktionalität kann insbesondere auf separate Relais- und ABS-Ventile stromaufwärts des Anhängersteuerventils verzichtet werden.

In einer bevorzugten Ausführungsform weist die Ventileinheit ein Ventilgehäuse mit einem (ersten) Druckluftanschluss für die Vorratsdruckleitung, und einem (zweiten) Druckluftanschluss für die anhängerseitige Druckleitung auf.

Weiter vorzugsweise weist das Ventilgehäuse einen (dritten) Druckluftanschluss zum Ablassen der Entlüftungsluft auf.

Gemäß einer weiteren bevorzugten Ausführungsform weist das Ventilgehäuse ferner einen (vierten) Druckluftanschluss für die Steuerdruckleitung auf.

Das erfindungsgemäße Bremssystem wird ferner dadurch weitergebildet, dass die Ventileinheit eine Mehrzahl gemeinsam in dem Ventilgehäuse angeordneter Schaltstufen und einen sich entlang der Schaltstufen erstreckenden Strömungspfad aufweist. Durch einen mehrstufigen Aufbau in der Ventileinheit kann ein einfach zu beherrschender, einsträngiger Strömungspfad vorgesehen werden, entlang dessen das durch die Ventileinheit geförderte Fluid nacheinander die verschiedenen Schaltstufen durchläuft. Vorzugsweise ist eine erste Schaltstufe dazu eingerichtet, den Strömungspfad selektiv entweder mit dem (ersten) Druckluftanschluss für die Vorratsdruckleitung oder mit dem (vierten) Druckluftanschluss für die Steuerdruckleitung fluidleitend zu verbinden. Durch Betätigung dieser Schaltstufe wird somit entweder Druckluft bei Vorratsdruck oder Druckluft bei Steuerdruck in den Strömungspfad der Ventileinheit eingeführt.

Weiter vorzugsweise ist eine zweite Schaltstufe dazu eingerichtet, den Strömungspfad selektiv entweder freizugeben oder fluiddicht zu verschließen. Es hat sich als vorteilhaft herausgestellt, diese Schaltstufe als mittlere Schaltstufe auszubilden, weil mit ihr sowohl der von Seiten der Vorratsdruckleitung beziehungsweise Steuerdruckleitung einströmende Fluidstrom versperrt werden kann, als auch der von der anhängerseitigen Druckleitung möglicherweise anstehende Bremsdruck stromaufwärts des Anhängersteuerventils.

Besonders bevorzugt ist es dabei, wenn eine dritte Schaltstufe dazu eingerichtet ist, den Strömungspfad selektiv entweder mit dem (zweiten) Druckluftanschluss für die anhängerseitige Druckleitung zu verbinden, oder den (zweiten) Druckluftanschluss für die anhängerseitige Druckleitung mit dem (dritten) Druckluftanschluss zum Ablassen der Entlüftungsluft zu verbinden. Besonders bevorzugt ist die dritte Schaltstufe ferner dazu eingerichtet, hierbei den Strömungspfad fluiddicht zu verschließen. Letztere Funktion kann alternativ oder zusätzlich von der zweiten Schaltstufe wie vorstehend beschrieben gewährleistet werden.

In einer bevorzugten Ausführungsform des erfindungsgemäßen Bremssystems sind eine, mehrere oder sämtliche der Schaltstufen als Magnetventil ausgebildet. Magnetventile weisen den Vorteil auf, dass sie einen geringen Platzbedarf mit einfacher Ansteuerung und robuster Bauart in sich vereinen.

Gemäß einer weiteren bevorzugten Ausführungsform des Bremssystems ist der (dritte) Druckluftanschluss der Ventileinheit zum Ablassen der Entlüftungsluft mit einem Schalldämpfer fluidleitend verbunden. Erfindungsgemäß werden die insbesondere beim Schalten und Entlüften entstehenden Geräusche der gesamten Ventileinheit durch den Schalldämpfer gemindert. Dies wird insbesondere deswegen als Vorteil erachtet, weil im Stand der Technik zwar das Anschließen von Schalldämpfern an ABS-Ventile bekannt ist, nicht aber an Magnetventile. Dadurch, dass erfindungsgemäß in zumindest einer bevorzugten Ausgestaltung mehrere (Magnet-)Ventile in einem Gehäuse zusammengefasst sind, und in dem das Gehäuse nur eine einzige Entlüftungsöffnung aufweist, wird eine im Vergleich zum Stand der Technik verbesserte und kostengünstigere Geräuschminderung erreicht.

Die Erfindung betrifft in einem weiteren Aspekt ein Nutzfahrzeug mit einem Anhänger, wobei das Nutzfahrzeug ein pneumatisches Bremssystem aufweist, und der Anhänger eine mit dem Bremssystem mittels eines Anhängersteuerventils vom Nutzfahrzeug aus angesteuerte pneumatische Anhängerbremsanlage aufweist.

Die Erfindung löst die ihr zugrunde liegende Aufgabe bei einem solchen Nutzfahrzeug, indem das Bremssystem nach einer der vorstehend beschriebenen bevorzugten Ausführungsformen ausgebildet ist. Hinsichtlich der Vorteile und weiterer bevorzugter Ausgestaltungen des erfindungsgemäßen Nutzfahrzeugs wird auf die vorstehenden Ausführungen zum erfindungsgemäßen Bremssystem verwiesen.

Die Erfindung betrifft ferner die Verwendung von Ventilmitteln in einem Bremssystem eines Nutzfahrzeugs, insbesondere in einem Bremssystem nach einer der vorstehend beschriebenen bevorzugten Ausführungsformen, um ein Anhängersteuerventil des Nutzfahrzeugs anzusteuern, wobei die Ventilmittel zum selektiven Verbinden entweder einer Vorratsdruckleitung oder einer Steuerdruckleitung des Nutzfahrzeugs mit dem Anhängersteuerventil eingerichtet sind.

Die Erfindung löst die ihr zugrunde liegende Aufgabe bei einer solchen Verwendung, indem Ventilmittel verwendet werden, die als eine bauliche Ventileinheit ausgebildet sind, mittels einer elektronischen Steuereinheit des Nutzfahrzeugs zwischen den Schaltzuständen
a) Verbinden einer anhängerseitigen Druckleitung des Nutzfahrzeugs mit der Steuerdruckleitung und
b) Verbinden der anhängerseitigen Druckleitung mit der Vorratsdruckleitung schaltbar sind, und dazu eingerichtet sind, die anhängerseitige Druckleitung in einem elektronischen Bremsregelfall in Abhängigkeit von korrespondierenden Befehlen der elektronischen Steuereinheit mit einem Reglungsdruck zu beaufschlagen.

Bezüglich weiterer Vorteile und bevorzugter Ausgestaltungen der erfindungsgemäßen Verwendung wird auf die vorstehenden Ausführungen zum erfindungsgemäßen Bremssystem und zum erfindungsgemäßen Nutzfahrzeug verwiesen.

Es werden im Folgenden mehrere Ausführungsbeispiele der Erfindung detailliert beschrieben. Diese sollen die Ausführungsbeispiele nicht notwendigerweise maßstäblich darstellen. Vielmehr ist die Zeichnung, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich ein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Die Erfindung wird im Folgenden unter Bezugnahme auf die beigefügten Figuren anhand eines bevorzugten Ausführungsbeispiels näher beschrieben. Hierbei zeigen:
Fig. 1 eine schematische Darstellung eines Nutzfahrzeugs samt Bremssystem gemäß der vorliegenden Erfindung,
Fig. 2 eine schematische Darstellung in Schnittansicht einer Ventileinheit des Bremssystems gemäß der Erfindung,
Fig. 3 a bis c schematische Schaltanordnungen der Ventileinheit gemäß Fig. 2, und
Fig. 4 a bis c weitere Schaltanordnungen der Ventileinheit gemäß Fig. 2.

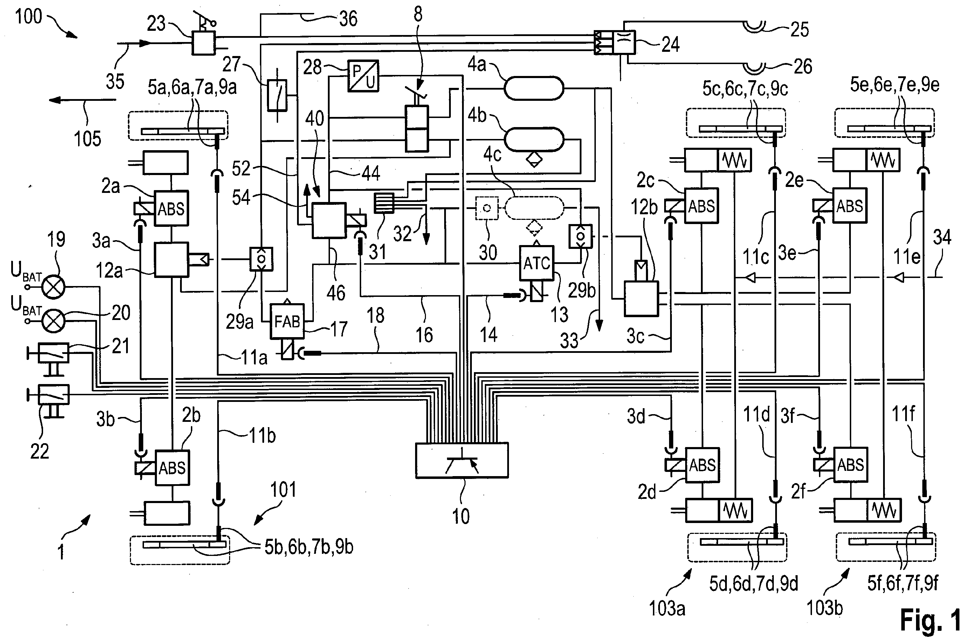

In Fig. 1 ist zunächst ein Nutzfahrzeug 100 schematisch dargestellt. Das Nutzfahrzeug 100 weist eine Vorderachse 101 und zwei Hinterachsen 103 a, b auf. Die Räder der Vorderachse 101 und der Hinterachsen 103 a, b - bezogen auf eine Fahrtrichtung 105 - werden mittels eines Bremssystems 1 angesteuert.

Das Bremssystem 1 weist für die Räder jeder Achse ein ABS-Ventil 2 a, b, c, d, e, f auf. Jedes der ABS-Ventile 2 a - f ist mittels korrespondierender Signalleitungen 3 a - f mit einer elektronischen Steuereinheit 10 verbunden, welche zur Steuerung der ABS-Ventile 2a - f, insbesondere der darin enthaltenen Magnetventile eingerichtet ist. Zur Erkennung von nötigen Bremsregelfällen sind in den Rädern der Vorderachse 101 und der Hinterachsen 103 a, b jeweils Sensoren 5 a - f vorgesehen, die jeweils in dafür vorgesehenen Buchsen 6 a-f befestigt sind und zur Überwachung der Radgeschwindigkeiten mittels korrespondierender Zahnräder 7 a - f eingerichtet sind. Für die Sensoren 5 a-f können jeweils separate Halterungen 9 a - f in allgemein bekannter Weise vorgesehen sein.

Die Sensoren 5 a - f sind mittels korrespondierend angeschlossener Signalleitungen 11 a - f mit der elektronischen Steuereinheit 10 verbunden und zur Übermittlung entsprechender Signale bezüglich der Radgeschwindigkeiten an die elektronische Steuereinheit 10 ausgebildet. Die ABS-Ventile 2 a - f der Vorderachse 101 und Hinterachse 103 a, b sind jeweils mittels Relaisventilen 12 a, b mit dem pneumatischen Leitungssystem des Nutzfahrzeugs 100 verbunden. Das Bremssystem 1 weist zum Vorhalten entsprechender Vorratsdrücke eine Anzahl von Druckquellen 4 a, b, c auf, die in unterschiedlichen, teils redundanten Kreisläufen zur Beaufschlagung der Relaisventile 12 a, b und somit der ABS-Ventile 2 a - f ausgebildet sind. Eine erste Druckquelle 4 a und eine zweite Druckquelle 4 b sind über eine Pedaleinheit 8 mit einem (ersten) Select-High-Ventil 29 a für die ABS-Ventile 2 a, b an der Vorderachse 101 des Nutzfahrzeugs 100 verbunden. Ferner ist zumindest die erste Druckquelle 4 a über die Pedaleinheit 8 mit einer Steuerdruckleitung 44 verbunden.

Die dritte Druckquelle 4 c ist über ein Rückschlagventil 30 und ein ATC-Ventil 13 mit einem (zweiten) Select-High-Ventil 29 b verbunden, um ein Relaisventil 12 b für die Ansteuerung der Hinterachse 103 a, b bzw. die Ansteuerung der dort zugeordneten ABS-Ventile 2 c - f anzusteuern. Ferner ist die dritte Druckquelle 4 c zur Bereitstellung von Druckluft für weitere Hilfssysteme über die Druckleitung 33 eingerichtet.

Die dritte Druckquelle 4 c steht überdies in fluidleitender Verbindung mit einer Vorratsdruckleitung 46 und einem FAB-Ventil 17, welches mittels Signalleitung 18 mit der elektronischen Steuereinheit 10 verbunden ist und zur Ansteuerung des Select-High-Ventils 29 a vorgesehen ist.

Das ATC-Ventil 13 ist mittels einer Signalleitung 14 mit der elektronischen Steuereinheit 10 verbunden.

Die Druckquellen 4 a, b, c sind fluidleitend mit einem Schutzventil 31 verbunden, welches wiederum fluidleitend mit einem Kreislauf zur Druckversorgung 32 für die Federspeicherbremse des Anhängers gekoppelt ist. Das Bremssystem 1 weist ein Handbremsventil 23 auf, welches fluidleitend mit einer Federspeicher-Druckversorgung 35 verbunden ist, und zum Ansteuern einer Federspeicherbremse 36 dient.

Das Bremssystem 1 weist ferner ein Anhängersteuerventil 24 auf. Das Anhängersteuerventil 24 ist mit zwei Kupplungsköpfen 25 und 26 verbunden und dient zur Bereitstellung von Druckluft für das Bremssystem 1 des Anhängers (nicht dargestellt).

Zur gezielten Ansteuerung des Anhängersteuerventils 24 sind Ventilmittel in Form einer Ventileinheit 40 als bauliche Einheit vorgesehen. Die Ventileinheit 40 ist eingangsseitig mit der Steuerdruckleitung 44 und der Vorratsdruckleitung 46 verbunden. Auslassseitig ist die Ventileinheit 40 mit der anhängerseitigen Druckleitung 52 verbunden, die zum Anhängersteuerventil 24 führt. Ferner weist die Ventileinheit 40 Druckluftanschluss 54 zum Ablassen der Entlüftungsluft aus der Ventileinheit 40 auf, an welchen ein (nicht dargestellter) Schalldämpfer angeschlossen werden kann.

Die Ventileinheit 40 ist mittels einer Signalleitung 16 mit der elektronischen Steuereinheit 10 verbunden und von dieser ansteuerbar.

Es kann optional ein Bremslichtschalter 27 vorgesehen sein, welcher in Abhängigkeit des Drucks in der anhängerseitigen Druckleitung 52 geschaltet wird. Ferner kann optional ein Drucksensor 28 vorgesehen sein, welcher mit der Steuerdruckleitung 44 zusammenwirkt und mit der elektronischen Steuereinheit 10 signalleitend verbunden ist.

Das Bremssystem 1 gemäß Figur 1 weist ferner eine mit der elektronischen Steuerleitung signalleitend verbundene Warnlampe 19 sowie eine Kontrolllampe für die Stabilitätssteuerung 20 auf. Ferner weist das Bremssystem 1 gemäß Figur 1 einen Funktionsschalter 21 für die ATC-Funktion und einen Funktionsschalter 22 für die ABS-Funktion auf.

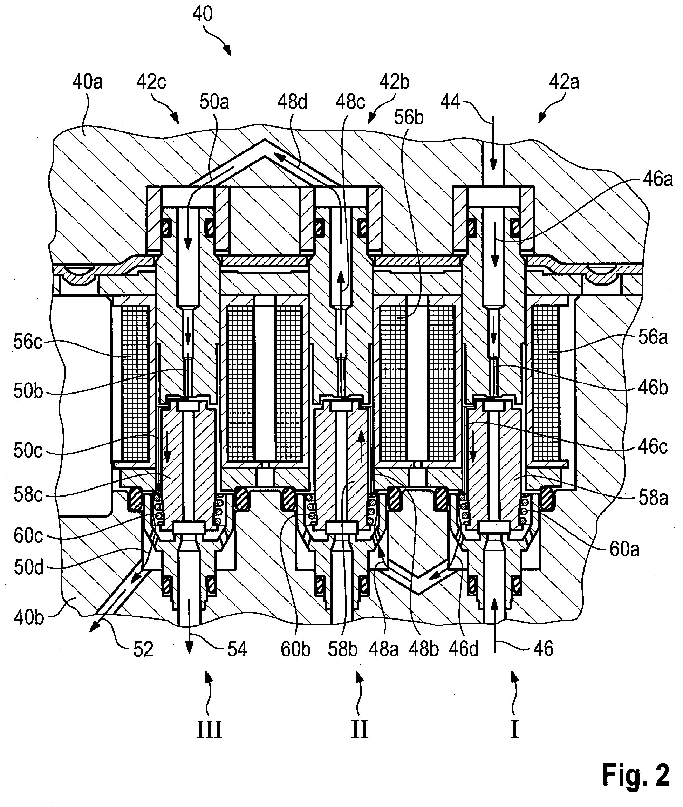

Erfindungswesentlicher Kern des Bremssystems 1 gemäß Figur 1 ist die Ventileinheit 40. Diese ist schematisch in Schnittdarstellung in Figur 2 näher erläutert.

Die in Figur 2 gezeigte Ventileinheit 40 weist ein erstes Gehäuseteil 40 a und ein zweites Gehäuseteil 40 b auf. Zwischen den beiden Gehäusenteilen 40 a, b sind mehrere Ventile eingespannt, vorliegend ausgebildet als Magnetventile 42 a, b, c. Das Magnetventil 42 a verkörpert eine erste Schaltstufe I, während das Magnetventil 42 b eine zweite Schaltstufe II, und das Magnetventil 42 c eine dritte Schaltstufe III verkörpert. Das Magnetventil 42 a ist dazu eingerichtet, zwischen einem ersten Schaltzustand und einem zweiten Schaltzustand hin- und hergeschaltet zu werden. In dem ersten Schaltzustand ist an einen (ersten) Druckluftanschluss die Vorratsdruckleitung 46 angeschlossen. An einen weiteren Druckluftanschluss ist die Steuerdruckleitung 44 angeschlossen. In der gezeigten Schaltstellung gemäß Figur 2 ist die Steuerdruckleitung 44 mit einem Strömungspfad innerhalb der Ventileinheit 40 verbunden. Fluid strömt entlang der Pfeile 46 a, b, c, d durch die erste Schaltstufe I hindurch. Hierbei strömt das Fluid entlang von Schlitzen, die umfangseitig an einem Anker 58 a ausgebildet sind. Der Anker 58 a wird mittels einer elektrisch erregbaren Spule 56 a zwischen seinen beiden Schaltpositionen hin- und herbewegt. Das Fluid tritt von der ersten Schaltstufe I zur zweiten Schaltstufe II über und strömt entlang der Pfeile 48 a, b, c, d durch die zweite Schaltstufe II hindurch. Wenn das Magnetventil 42 b der zweiten Schaltstufe II von dem in Figur 2 zweiten Zustand aus in eine andere Schaltstellung bewegt wird, wird das Fluid ungefähr bei Ende des Pfeils 48 b am Ventilsitz des Ankers 58 b der zweiten Schaltstufe II aufgehalten. Der, ebenfalls geschlitzte, Anker 58 b wird mittels der Spule 56 b bewegt.

Von der zweiten Schaltstufe II aus gelangt das Fluid von dem Magnetventil 42 c der dritten Schaltstufe III, wo es entlang der Pfeile 50 a, b, c, d in Richtung der anhängerseitigen Druckleitung 52 strömt und durch einen entsprechenden Druckluftanschluss das Gehäuse der Ventileinheit 40 verlässt. Das Magnetventil 42 c der dritten Schaltstufe III weist ebenfalls einen geschlitzten Anker 58 c auf, welcher mittels einer Spule 56 c bewegt wird. Wird der Anker 58 c der dritten Schaltstufe III von der Stellung gemäß Figur 2 aus in seine andere Schaltstellung gebracht, strömt das Fluid nicht entlang des Pfeils 50 d in Richtung der anhängerseitigen Druckleitung 52, sondern in Richtung des Druckluftanschlusses 54 zum Ablassen der Entlüftungsluft, und zwar vom Druckluftanschluss zur anhängerseitigen Druckleitung 52 kommend.

Die Magnetventile 42 a, b, c der drei Schaltstufen I, II, III sind jeweils mittels einer Feder 60 a, b, c vorgespannt.

Die zweite Schaltstufe II ist optional dafür vorgesehen, den Fluidfluss durch die Ventileinheit 40 hindurch beim Schalten aus der gemäß Figur 2 gezeigten Schaltstellung heraus zu blockieren.

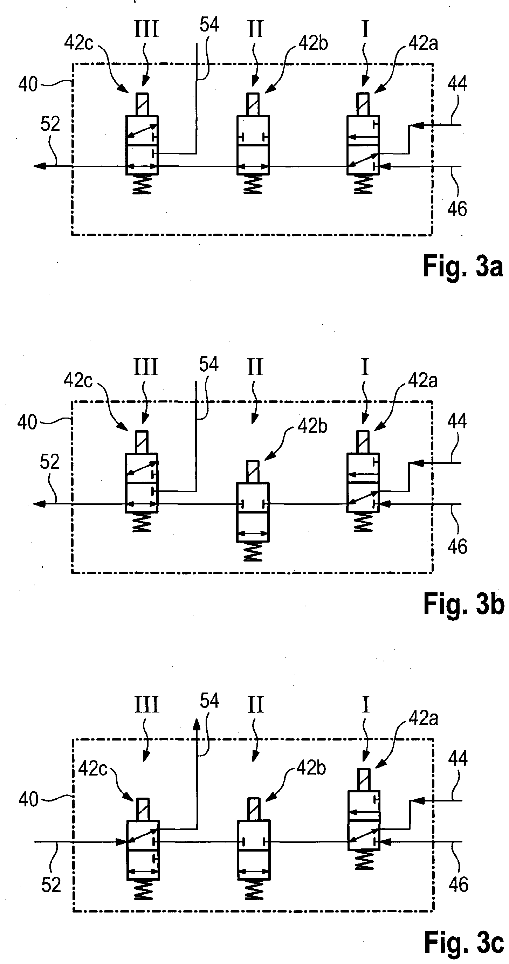

Die Funktionsweise der Ventileinheit 40 im erfindungsgemäßen Bremssystem 1 ist in den Figuren 3 a bis c und 4 a bis c schematisch näher erläutert.

Figur 3 a zeigt den Schaltzustand der Ventileinheit 40 gemäß Darstellung aus Figur 2. Das Magnetventil 42 a der ersten Schaltstufe I ist so gestaltet, dass der Strömungspfad hin zur Steuerdruckleitung 44 freigegeben ist. Von der ersten Schaltstufe I aus strömt das Fluid entlang des Strömungspfads zur zweiten Schaltstufe II, in welche das Magnetventil 42 b zum Durchleiten des Fluides in Richtung der dritten Schaltstufe III geschaltet ist. In der dritten Schaltstufe III ist das Magnetventil 42 c derart geschaltet, dass das Fluid durch die Schaltstufe III hindurchströmen kann und zur anhängerseitigen Druckleitung 52 hin aus der Ventileinheit 40 austritt. Die Entlüftungsöffnung 54 ist in dieser Stellung verschlossen.

In der Stellung gemäß Figur 3b ist der Schaltzustand der Schaltstufen 1 und 3 gleich dem Schaltzustand gemäß Figur 3 a. Die Schaltstufe II ist derart geschaltet, dass das Magnetventil 42 b den Fluidfluss in beiden Richtungen, sowohl zur anhängerseitigen Druckleitung 52 hin als auch zur Steuerdruckleitung 44 hin, unterbricht.

In Figur 3c ist zusätzlich zu dem Schalten der Schaltstufe II die Schaltstufe III so gestaltet, dass das Magnetventil 42 c Druckluft von der anhängerseitigen Druckleitung 52 zur Entlüftungsöffnung 54 hin entweichen lässt. Das zusätzliche Schalten der zweiten Schaltstufe II ist eine optionale zusätzliche Absicherung, um den Austritt von Fluid zuverlässig zu unterbinden, soweit nicht die anhängerseitige Druckleitung 52 entlüftet werden soll.

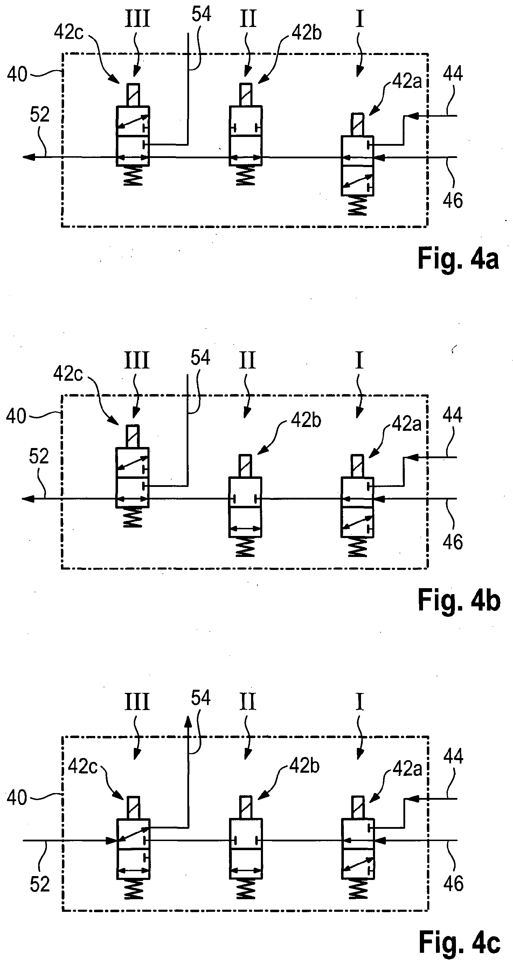

Ein vergleichbares Schaltszenario ist in Figuren 4 a bis c dargestellt. Der Schaltzustand gemäß Figur a ist gleich dem Schaltzustand gemäß 3 a mit der Ausnahme, dass das Magnetventil 42 a der ersten Schaltstufe I so geschaltet ist, dass das Fluid aus der Vorratsdruckleitung 46 kommend in den Strömungspfad der Ventileinheit 40 eingeleitet wird.

Dasselbe gilt für die Figuren 4b und 4c, die jeweils gleich den Schaltzuständen der korrespondierenden Figuren 3b und 3c sind, jeweils mit der Ausnahme, dass das Magnetventil 42 a der ersten Schaltstufe I nicht die Steuerdruckleitung 44, sondern die Vorratsdruckleitung 46 mit der Ventileinheit 40 fluidleitend verbindet.

Wie sich aus der vorstehenden Beschreibung insbesondere der Figuren ergibt, ist mit der Erfindung eine mechanisch und reglungstechnisch sehr einfach beherrschbare Lösung für die zugrunde liegende Aufgabe bereitgestellt, die die Funktionen mehrerer bislang separater Ventileinheiten auf kostengünstige und konstruktiv robuste Weise zusammenführt.

### Bezugszeichenliste (Bestandteil der Beschreibung)

- 1: Bremssystem
- 2a-f: ABS-Ventil
- 3a-f: Signalleitung für ABS-Ventil
- 5a-f: Sensor
- 6a-f: Buchse für Sensor
- 7a-f: Zahnrad
- 8: Bremspedaleinheit
- 9a-f: Sensorhalterung
- 10: elektronische Steuereinheit
- 11a-f: Signalleitung für Sensor
- 12a, b: Relaisventil
- 13: ATC-Ventil
- 14: Signalleitung für ATC-Ventil
- 16: Signalleitung für Ventileinheit
- 17: FAB-Ventil
- 18: Signalleitung für FAB-Ventil
- 19: Warnlampe
- 20: Stabilitätsregelungs-Kontrolllampe
- 21: ATC-Funktionsschalter
- 22: ABS-Funktionsschalter
- 23: Handbremsventil
- 24: Anhängersteuerventil
- 25: Kupplungskopf
- 26: Kupplungskopf
- 27: Bremslichtschalter
- 28: Drucksensor
- 29a, b: Select-High-Ventil
- 30: Rückschlagventil
- 31: Schutzventil
- 32: Druckversorgung für Anhänger-Federspeicherbremse
- 33: pneumatische Hilfsvorrichtungen
- 34: Federspeicherbremse
- 35: Federspeicherbrems-Versorgung
- 36: Federspeicherbremse
- 40: Ventileinheit
- 40a, b: Gehäuseteil
- 42a: Magnetventil für Schaltstufe I
- 42b: Magnetventil für Schaltstufe II
- 42c: Magnetventil für Schaltstufe III
- 44: Steuerdruckleitung
- 46: Vorratsdruckleitung
- 46a-d: Richtungspfeile für die Fluidfluss in erster Schaltstufe I
- 48a-d: Richtungspfeile für die Fluidfluss in Schaltstufe II
- 50a-d: Richtungspfeile für die Fluidfluss in Schaltstufe III
- 52: anhängerseitige Druckleitung
- 54: Druckluftanschluss
- 56a, b, c: Spule
- 58a, b, c: Anker
- 60a, b, c: Feder
- 100: Nutzfahrzeug
- 101: Vorderachse
- 103a, b: Hinterachsen
- 105: Fahrtrichtung

## Patentansprüche

1. Bremssystem (1) für ein Nutzfahrzeug (100) mit Anhänger, mit
- einem Anhängersteuerventil (24) zum Ansteuern einer Anhängerbremsanlage vom Nutzfahrzeug (100) aus,
- einer Vorratsdruckleitung (46) zum Beaufschlagen der Anhängerbremsanlage mit einem Vorratsdruck,
- einer Steuerdruckleitung (44) zum Beaufschlagen der Anhängerbremsanlage mit einem bedienerseitig, insbesondere mittels einer Bremspedaleinheit (8), eingesteuerten Steuerdruck; **gekennzeichnet durch**
- Ventilmitteln zum selektiven Verbinden entweder der Vorratsdruckleitung (46) oder der Steuerdruckleitung (44) mit dem Anhängersteuerventil (24), und
- einer elektronischen Steuereinheit (10), die zum Ausführen einer elektronischen Bremsregelung eingerichtet ist,
**dadurch gekennzeichnet, dass** die Ventilmittel
- als eine bauliche Ventileinheit (40) ausgebildet,
- mittels der elektronischen Steuereinheit (10) zwischen den Schaltzuständen
a) Verbinden einer anhängerseitigen Druckleitung (52) mit der Steuerdruckleitung (44), und
b) Verbinden der anhängerseitigen Druckleitung (52) mit der Vorratsdruckleitung (46) schaltbar, und
dazu eingerichtet sind, die anhängerseitige Druckleitung (52) in einem Bremsregelfall in Abhängigkeit von korrespondierenden Befehlen der elektronischen Steuereinheit (10) mit einem Regelungsdruck zu beaufschlagen.

2. Bremssystem (1) nach Anspruch 1,
**dadurch gekennzeichnet, dass** die Ventileinheit (40) mittels der elektronischen Steuereinheit (10) in den Schaltzustand
c) Entlüften der anhängerseitigen Druckleitung (52)
schaltbar ist.

3. Bremssystem (1) nach Anspruch 1 oder 2,
**dadurch gekennzeichnet, dass** die Ventileinheit (40) mittels der elektronischen Steuereinheit (10) in den Schaltzustand
d) Halten des Drucks in der anhängerseitigen Druckleitung (52)
schaltbar ist.

4. Bremssystem (1) nach einem der vorstehenden Ansprüche,
**dadurch gekennzeichnet, dass** die Ventileinheit (40) ein Ventilgehäuse mit einem (ersten) Druckluftanschluss für die Vorratsdruckleitung (46), und einem (zweiten) Druckluftanschluss für die anhängerseitige Druckleitung (52) aufweist.

5. Bremssystem (1) nach Anspruch 4,
**dadurch gekennzeichnet, dass** das Ventilgehäuse einen (dritten) Druckluftanschluss (54) zum Ablassen der Entlüftungsluft aufweist.

6. Bremssystem (1) nach Anspruch 4 oder 5,
**dadurch gekennzeichnet, dass** das Ventilgehäuse einen (vierten) Druckluftanschluss für die Steuerdruckleitung (44) aufweist.

7. Bremssystem (1) nach einem der Ansprüche 4 bis 6,
**dadurch gekennzeichnet, dass** die Ventileinheit (40) eine Mehrzahl gemeinsam in dem Ventilgehäuse angeordneter Schaltstufen (I, II, III) und einen sich entlang der Schaltstufen (I, II, III) erstreckenden Strömungspfad aufweist.

8. Bremssystem (1) nach Anspruch 7,
wobei eine erste Schaltstufe (I) dazu eingerichtet ist, den Strömungspfad selektiv entweder mit dem (ersten) Druckluftanschluss für die Vorratsdruckleitung (46) oder mit dem (vierten) Druckluftanschluss für die Steuerdruckleitung (44) fluidleidend zu verbinden.

9. Bremssystem (1) nach Anspruch 8,
wobei eine zweite Schaltstufe (II) dazu eingerichtet ist, den Strömungspfad selektiv entweder freizugeben oder fluiddicht zu verschließen.

10. Bremssystem (1) nach Anspruch 7 oder 8,
wobei eine dritte Schaltstufe (III) dazu eingerichtet ist, den Strömungspfad selektiv entweder mit dem (zweiten) Druckluftanschluss für die anhängerseitige Druckleitung (52) zu verbinden, oder den zweiten Druckluftanschluss mit dem (dritten) Druckluftanschluss (54) zum Ablassen der Entlüftungsluft zu verbinden.

11. Bremssystem (1) nach einem der Ansprüche 7 bis 10,
wobei ein, mehrere oder sämtliche der Schaltstufen als Magnetventile (42 a-c) ausgebildet sind.

12. Bremssystem (1) nach einem der Ansprüche 5 bis 11,
wobei der (dritte) Druckluftanschluss (54) zum Ablassen der Entlüftungsluft mit einem Schalldämpfer fluidleitend verbunden ist.

13. Nutzfahrzeug (100) mit einem Anhänger, wobei das Nutzfahrzeug (100) ein pneumatisches Bremssystem (1) ausweist, und der Anhänger eine mit dem Bremssystem (1) mittels eines Anhängersteuerventils (24) vom Nutzfahrzeug (100) aus angesteuerte pneumatische Anhängerbremsanlage aufweist, **dadurch gekennzeichnet, dass** das Bremssystem (1) nach einem der vorstehenden Ansprüche ausgebildet ist.

14. Verwendung von Ventilmitteln in einem Bremssystem (1) eines Nutzfahrzeuges (100), insbesondere in einem Bremssystem (1) nach einem der Ansprüche 1 bis 12, um ein Anhängersteuerventil (24) des Nutzfahrzeugs (100) anzusteuern, wobei
die Ventilmittel zum selektiven Verbinden entweder einer Vorratsdruckleitung (46) oder einer Steuerdruckleitung (44) des Nutzfahrzeugs (100) mit dem Anhängersteuerventil (24), eingerichtet sind,
**dadurch gekennzeichnet, dass** die Ventilmittel
- als eine bauliche Ventileinheit (40) ausgebildet,
- mittels einer elektronischen Steuereinheit (10) des Nutzfahrzeugs (100) zwischen den Schaltzuständen
a) Verbinden einer anhängerseitigen Druckleitung (32) des Nutzfahrzeugs (100) mit der Steuerdruckleitung (44), und
b) Verbinden der anhängerseitigen Druckleitung (52) mit der Vorratsdruckleitung (46) schaltbar, und
dazu eingerichtet sind, die anhängerseitige Druckleitung (52) in einem Bremsregelfall in Abhängigkeit von korrespondierenden Befehlen der elektronischen Steuereinheit (10) mit einem Regelungsdruck zu beaufschlagen.

## Claims

1. Brake system (1) for a commercial vehicle (100) with a trailer, with
- a trailer control valve (24) for activating a trailer brake system from the commercial vehicle (100),
- a supply pressure line (46) for subjecting the trailer brake system to a supply pressure,
- a control pressure line (44) for subjecting the trailer brake system to a control pressure that is controlled on the user-side, in particular by means of a brake pedal unit (8), **characterized by**
- a valve arrangement for the selective connection of either the supply pressure line (46) or the control pressure line (44) to the trailer control valve (24), and
- an electronic control unit (10) that is arranged to perform electronic brake control,
**characterized in that** the valve arrangement
- is in the form of a structural valve unit (40),
- can be switched by means of the electronic control unit (10) between the switching states
a) connecting a trailer-side pressure line (52) to the control pressure line (44), and
b) connecting the trailer-side pressure line (52) to the supply pressure line (46), and
are arranged to subject the trailer-side pressure line (52) to a control pressure in a brake control situation depending on corresponding commands of the electronic control unit (10).

2. Brake system (1) according to Claim 1, **characterized in that** the valve unit (40) can be switched by means of the electronic control unit (10) into the switching state
c) venting the trailer-side pressure line (52).

3. Brake system (1) according to Claim 1 or 2, **characterized in that** the valve unit (40) can be switched by means of the electronic control unit (10) into the switching state
d) maintaining the pressure in the trailer-side pressure line (52).

4. Brake system (1) according to any one of the preceding claims,
**characterized in that** the valve unit (40) comprises a valve housing with a (first) compressed air port for the supply pressure line (46), and a (second) compressed air port for the trailer-side pressure line (52).

5. Brake system (1) according to Claim 4,
**characterized in that** the valve housing comprises a (third) compressed air port (54) for discharging the venting air.

6. Brake system (1) according to Claim 4 or 5,
**characterized in that** the valve housing comprises a (fourth) compressed air port for the control pressure line (44).

7. Brake system (1) according to any one of Claims 4 to 6,
**characterized in that** the valve unit (40) comprises a plurality of switching stages (I, II, III) commonly disposed in the valve housing and a flow path extending along the switching stages (I, II, III).

8. Brake system (1) according to Claim 7,
where a first switching stage (I) is arranged to fluidically connect the flow path selectively either to the (first) compressed air port for the supply pressure line (46) or to the (fourth) compressed air port for the control pressure line (44).

9. Brake system (1) according to Claim 8,
where a second switching stage (II) is arranged to selectively either open the flow path or close the flow path fluid tight.

10. Brake system (1) according to Claim 7 or 8,
where a third switching stage (III) is arranged to connect the flow path selectively either to the (second) compressed air port for the trailer-side pressure line (52), or to connect the second compressed air port to the (third) compressed air port (54) for discharging the venting air.

11. Brake system (1) according to any one of Claims 7 to 10,
where one, a plurality of or all the switching stages are in the form of solenoid valves (42 a-c).

12. Brake system (1) according to any one of Claims 5 to 11,
where the (third) compressed air port (54) for discharging the venting air is fluidically connected to a noise attenuator.

13. Commercial vehicle (100) with a trailer, where the commercial vehicle (100) has a pneumatic brake system (1), and the trailer comprises a pneumatic trailer brake system that is controlled with the brake system (1) by means of a trailer control valve (24) from the commercial vehicle (100),
**characterized in that** the brake system (1) is of a form according to any one of the preceding claims.

14. Use of a valve arrangement in a brake system (1) of a commercial vehicle (100), in particular in a brake system (1) according to any one of Claims 1 to 12, in order to activate a trailer control valve (24) of the commercial vehicle (100), where
the valve arrangement is arranged for selectively connecting either a supply pressure line (46) or a control pressure line (44) of the commercial vehicle (100) to the trailer control valve (24),
**characterized in that** the valve arrangement
- is in the form of a structural valve unit (40),
- can be switched by means of an electronic control unit (10) of the commercial vehicle (100) between the switching states
a) connecting a trailer-side pressure line (32) of the commercial vehicle (100) to the control pressure line (44), and
b) connecting the trailer-side pressure line (52) to the supply pressure line (46), and
is arranged to subject the trailer-side pressure line (52) to a control pressure in a brake control situation depending on corresponding commands of the electronic control unit (10).

## Revendications

1. Système de frein (1) pour un véhicule utilitaire (100) avec remorque, avec
- une vanne de commande de remorque (24) pour la commande d'une installation de frein de remorque à partir du véhicule utilitaire (100),
- une conduite de pression de réserve (46) pour alimenter l'installation de frein de remorque avec une pression de réserve,
- une conduite de pression de commande (44) pour alimenter l'installation de frein de remorque avec une pression de commande réglable par le conducteur, en particulier au moyen d'une unité de pédale de frein (8),
**caractérisé par**
- des moyens de vanne pour la liaison sélective soit de la conduite de pression de réserve (46) soit de la conduite de pression de commande (44) à la vanne de commande de remorque (24), et
- une unité de commande électronique (10), qui est conçue pour exécuter une régulation électronique du freinage,
**caractérisé en ce que** les moyens de vanne
- sont réalisés sous la forme d'une unité de vanne structurelle (40),
- peuvent être commutés au moyen de l'unité de commande électronique (10) entre les états de commutation
a) raccordement d'une conduite de pression de la remorque (52) à la conduite de pression de commande (44), et
b) raccordement de la conduite de pression de la remorque (52) à la conduite de pression de réserve (46), et
sont conçus pour alimenter la conduite de pression de la remorque (52) avec une pression de régulation dans un cas de régulation des freins en fonction d'instructions correspondantes de l'unité de commande électronique (10).

2. Système de frein (1) selon la revendication 1, **caractérisé en ce que** l'unité de vanne (40) peut être commutée dans l'état de commutation
c) purge de la conduite de pression de la remorque (52) au moyen de l'unité de commande électronique (10).

3. Système de frein (1) selon la revendication 1 ou 2, **caractérisé en ce que** l'unité de vanne (40) peut être commutée dans l'état de commutation
d) maintien de la pression dans la conduite de pression de la remorque (52)
au moyen de l'unité de commande électronique (10).

4. Système de frein (1) selon l'une quelconque des revendications précédentes, **caractérisé en ce que** l'unité de vanne (40) présente un boîtier de vanne avec un (premier) raccord d'air comprimé pour la conduite de pression de réserve (46) et un (deuxième) raccord d'air comprimé pour la conduite de pression de la remorque (52).

5. Système de frein (1) selon la revendication 4, **caractérisé en ce que** le boîtier de vanne présente un (troisième) raccord d'air comprimé pour l'échappement de l'air de purge.

6. Système de frein (1) selon la revendication 4 ou 5, **caractérisé en ce que** le boîtier de vanne présente un (quatrième) raccord d'air comprimé pour la conduite de pression de commande (44).

7. Système de frein (1) selon l'une quelconque des revendications 4 à 6, **caractérisé en ce que** l'unité de vanne (40) présente une multiplicité d'étages de commutation (I, II, III) disposés ensemble dans le boîtier de vanne et un chemin d'écoulement s'étendant le long des étages de commutation (I, II, III).

8. Système de frein (1) selon la revendication 7, dans lequel un premier étage de commutation (I) est conçu pour relier en communication fluidique le chemin d'écoulement de façon sélective soit au (premier) raccord d'air comprimé pour la conduite de pression de réserve (46) soit au (quatrième) raccord d'air comprimé pour la conduite de pression de commande (44).

9. Système de frein (1) selon la revendication 8, dans lequel un deuxième étage de commutation (II) est conçu pour sélectivement soit libérer soit fermer de façon étanche au fluide le chemin d'écoulement.

10. Système de frein (1) selon la revendication 7 ou 8, dans lequel un troisième étage de commutation (III) est conçu soit pour raccorder le chemin d'écoulement de façon sélective au (deuxième) raccord d'air comprimé pour la conduite de pression de la remorque (52) soit pour raccorder le deuxième raccord d'air comprimé au (troisième) raccord d'air comprimé (54) pour l'échappement de l'air de purge.

11. Système de frein (1) selon l'une quelconque des revendications 7 à 10, dans lequel un, plusieurs ou la totalité des étages de commutation sont constitués par des vannes magnétiques (42 a-c).

12. Système de frein (1) selon l'une quelconque des revendications 5 à 11, dans lequel le (troisième) raccord d'air comprimé (54) est raccordé en communication fluidique à un silencieux pour l'échappement de l'air de purge.

13. Véhicule utilitaire (100) avec une remorque, dans lequel le véhicule utilitaire (100) présente un système de frein pneumatique (1), et la remorque présente une installation de frein de remorque pneumatique commandé avec le système de frein (1) au moyen d'une vanne de commande de remorque (24) à partir du véhicule utilitaire (100), **caractérisé en ce que** le système de frein (1) est réalisé selon l'une quelconque des revendications précédentes.

14. Utilisation de moyens de vanne dans un système de frein (1) d'un véhicule utilitaire (100), en particulier dans un système de frein (1) selon l'une quelconque des revendications 1 à 12, pour commander une vanne de commande de remorque (24) du véhicule utilitaire (100), dans laquelle les moyens de vanne sont conçus pour le raccordement sélectif soit d'une conduite de pression de réserve (46) soit d'une conduite de pression de commande (44) du véhicule utilitaire (100) à la vanne de commande de remorque (24),
**caractérisée en ce que** les moyens de vanne
- sont réalisés sous la forme d'une unité de vanne structurelle (40),
- peuvent être commutés au moyen d'une unité de commande électronique (10) du véhicule utilitaire (100) entre les états de commutation
a) raccordement d'une conduite de pression de la remorque (32) du véhicule utilitaire (100) à la conduite de pression de commande (44), et
b) raccordement de la conduite de pression de la remorque (52) à la conduite de pression de réserve (46), et
sont conçus pour alimenter la conduite de pression de la remorque (52) avec une pression de régulation dans un cas de régulation des freins en fonction d'instructions correspondantes de l'unité de commande électronique (10).
